# EUROPEAN PATENT APPLICATION

(11) **EP 1 202 580 A2**
(43) Date of publication of application: **02.05.2002**
(21) Application number: 01125417.4
(22) Date of filing: 31.10.2001
(51) Int. Cl.: H04N 7/50

(54) **Video coding method, apparatus and mobile radio terminal**

(30) Priority: 31.10.2000 JP 2000333203
(71) Applicant: Kabushiki Kaisha Toshiba, Tokyo 105-8001 (JP)
(72) Inventor: Suzuki, Masakazu, Intellectual Property Division, Minato-ku, Tokyo 105-8001 (JP)
(74) Representative: HOFFMANN - EITLE

(57) **Abstract**

In an image coding method for coding an input image signal in one of intra coding mode and inter coding mode, that a moving-picture frame of the input image signal (11) switches a still image frame of the input image signal (11) is detected (31, 36, 38). After that, a coding mode for the still image frame is forcibly set (15) to the intra coding mode. As a result, a visually discernible degradation of image quality can be suppressed.

## Description

The present invention relates to a video (image) coding method and apparatus for coding, at a low bitrate, an image signal indicative of a moving picture or a still image, and a mobile radio terminal using the video coding apparatus, and more particularly to a video coding method and apparatus and a mobile radio terminal (e.g. a cellular phone), which are suitable for the execution of videophone transmission using mobile information devices.

In mobile radio communication systems, techniques of transmitting a moving picture using, for example, a videophone function are now being developed in light of near future broadband communication. The moving-picture transmission techniques include a video (image) coding method called "MPEG-4 (Moving Picture Experts Group Phase 4)" as an international standard, which is used for compressing a moving picture.

In the MPEG-4 video coding method coding is usually executed at a constant and low bitrate not more than 64 kbps.

Further, to increase a coding efficiency, intra coding (intra frame coding) is executed only on the initial frame of an input image signal, thereby creating an I-VOP (Intra -Video Object Plane). On the next following frames, inter coding (inter frame coding) is executed, thereby creating P-VOPs (Predicted-Video Object Planes).

In each P-VOP, each macroblock is subjected to intra coding or inter coding. However, a major part of still images, and substantially still images that do not contain much motion are coded by inter coding. A macroblock to be subjected to intra coding will hereinafter be referred to as an "intra macroblock", while a macroblock to be subjected to inter coding will hereinafter be referred to as an "inter macroblock".

In the MPEG-4 video coding method, to prevent accumulation of errors resulting from mismatches that occur in IDCT (Inverse Discrete Cosine Transform), it is prescribed that the same macroblock should be subjected to intra coding at least once per 132 times. The operation of periodically subjecting a macroblock to an intra coding mode is called "refresh". In the case of still images or images that do not contain much motion, most macroblocks are inter macroblocks, and only macroblocks refreshed by the periodically executed refresh operation are intra macroblocks. Conventional video coding apparatuses involve the problem of image quality degradation or variation due to the existence of such refreshed macroblocks.

More specifically, since slightly different quantization methods are used in intra coding and inter coding, there is little difference between the image quality resulting from the intra and inter decodings. Accordingly, in still images or images that do not contain much motion, intra macroblocks obtained by periodical refreshing are conspicuous as compared with inter macroblocks, with the result that the quality of an entire image appears degraded.

Further, in still images or images that do not contain much motion, a parameter (a quantization step) used to quantize a DCT coefficient is set at a high value in order to suppress a coding bitrate. Furthermore, when the image in a refreshed macroblock is complicated, the number of coded bits in the macroblock is increased. In this case, to suppress the coding bitrate, the quantization step used in the next frame is increased. As a result, the image quality of the next frame is degraded, whereby image quality variation between frames becomes conspicuous and hence the entire image appears degraded as in the above-mentioned case.

As described above, in the prior art, when executing moving-picture transmission at a low bitrate by, for example, a videophone function incorporated in a mobile radio terminal, using the MPEG-4 video coding method, refreshed macroblocks are disadvantageously conspicuous in, in particular, still images or substantially still images that do not contain much motion, as a result of the refresh operation executed in units of macroblocks. In addition, different quantization parameter values are used between refreshed macroblocks and inter macroblocks in a single image, which causes variations in image quality and hence a visually discernible degradation of image quality.

It is an object of the present invention to provide a video coding method and apparatus capable of suppressing a visually discernible degradation of image quality due to image quality variations caused by variations in quantization parameter values resulting from refreshed macroblocks, and also provide a mobile radio terminal using the video coding apparatus.

According to a first aspect of the present invention, there is provided an image coding method for coding an image signal selectively in one of intra coding mode and inter coding mode, comprising:
detecting whether an input image signal is a still image frame or a moving image frame;
coding the input image signal in the intra coding mode if the detecting detects the input image signal is a still image frame.

According to a second aspect of the present invention, there is provided an image coding apparatus comprising:
a detection section configured to detect whether an input image signal is a still image frame or a moving image frame; and
a coding section configured to code the input image signal in the intra coding mode if the detecting detects the input image signal is a still image frame.

According to a third aspect of the present invention, there is provided a mobile radio terminal comprising:
an image input section configured to input an image signal;
a detection section configured to detect whether an input image signal is a still image frame or a moving image frame; and
a coding section configured to code the input image signal in the intra coding mode if the detecting detects the input image signal is a still image frame.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram illustrating the internal electrical configuration of a mobile radio terminal;
FIG. 2 is a block diagram of an MPEG-4 module shown in FIG. 1 and serving as a video coding apparatus according to a first embodiment of the invention; and
FIG. 3 is a block diagram of an MPEG-4 module shown in FIG. 1 and serving as a video coding apparatus according to a second embodiment of the invention.

Video (image) coding apparatuses according to embodiments of the present invention will be described with respect to the accompanying drawings.

### (First Embodiment)

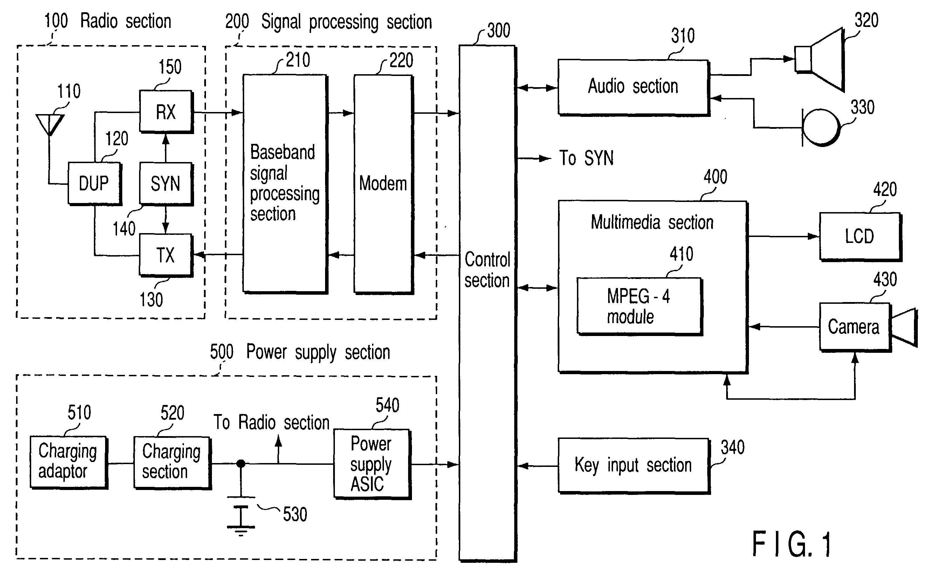

FIG. 1 is a block diagram illustrating the internal electrical configuration of a mobile radio terminal according to the present invention.

A signal received by an antenna 110 is input to a duplexer (DUP) 120, and then to a receiving circuit (RX) 150. In the receiving circuit (RX) 150, out of band undesired signal components and noise contained in the signal are attenuated. The resultant signal is input to a low-noise amplifier (not shown) incorporated in the circuit 150. The low-noise amplifier amplifies the input signal to a level suitable for signal processing executed later. Also in the receiving circuit 150, the received signal is subjected to frequency conversion, channel selection, orthogonal demodulation and signal amplification, etc. The orthogonal demodulation is executed on the basis of a local area oscillated signal generated from a synthesizer circuit (SYN) 140. The synthesizer circuit (SYN) 140 generates the local area oscillated signal of a frequency necessary for signal reception under the control of a control signal from a control section 300, and supplies the local area oscillated signal to the receiving circuit 150. This enables the receiving circuit 150 to be synchronized with the frequency of the received signal.

The local area oscillated signal generated by the synthesizer circuit 140 is input to a 90-degree phase shifter (not shown), where signals of phases shifted by 90° from each other are created. These signals are input to a down converter (not shown), where they are mixed with a receiving radio frequency signal output from the low-noise amplifier, thereby creating, by frequency conversion, two received baseband signals of phases shifted by 90° from each other. Out of band undesired signal components and noise contained in the signals are removed by a low-pass filter (not shown). The received baseband signals with out of band undesired signal components and noise are supplied to a variable-gain amplifier (not shown), where the signals are amplified to a predetermined level at an amplification rate designated by a control signal output from the control section 300. The resultant signals are output to a baseband signal processing section 210.

In the baseband signal processing section 210, the input signals are converted into digital signals by an analog-to-digital converter (not shown), and then subjected to a digital signal process necessary for communication. The resultant digital signals are input to a modem 220, where the signals are subjected to digital demodulation. The demodulated signals output from the modem 220 are input to the control section 300.

The demodulated and coded signals are data signals or voice signals of a predetermined format. If the demodulated signals contain an image data signal, the image data signal is input to a multimedia section 400. In the section 400, the image data signal is input to an MPEG-4 module 410, where it is subjected to a video decoding process and decompressed. The decompressed image data signal is displayed on an LCD (Liquid Crystal Display) 420. If the demodulated signals contain a voice signal, sound is output from a speaker 320 via an audio section 310.

If the transmitting signal is a voice signal, the voice of, for example, a user is input to a microphone 330. The microphone 330 converts the voice into a voice signal and outputs the voice signal to the audio section 310. The audio section 310 amplifies the voice signal and converts the amplified signal to a digital signal, using an analog-to-digital converter (not shown). The resultant digital signal is output to the modem 220 via the control section 300. The modem section 200 modulates the digital signal and outputs the modulated signal to the baseband signal processing section 210, where the modulated signal is converted into an analog signal by a digital-to-analog converter (not shown).

Further, if the transmitting signal is an image signal, a camera 430 picks up an image and converts the image into an image signal. The image signal is input to the multimedia section 400. The input image signal is input to the MPEG-4 module 410, where the input image signal is converted into compressed image data by the MPEG-4 technique. The resultant image data is output to the control section 300. If voice data is attached to the image data, a voice input from the microphone 330 or voice data stored in a memory is input to the multimedia section 400. The input voice or voice data is input to the MPEG-4 module 410, where it is related to the aforementioned image data, and the image data is converted into compressed data. The compressed data is output to the modem 220 and modulated. The modulated and compressed data is output as a signal to the baseband signal processing section 210, where it is converted to an analog signal by the digital-to-analog converter.

The above-described configuration may be modified such that an image input terminal for inputting image data is provided, and image data is input from the terminal to the multimedia section 400. In this case, a later process is similar to the above-described one.

The above-mentioned voice signal and compressed image signal are output, as a modulated baseband signal, to a transmitter (TX) circuit 130. The transmitter circuit 130 mixes a local area oscillated signal from the synthesizer circuit 140 with a modulated baseband signal from the baseband signal processing section 210, thereby creating a to-be-transmitted signal. The transmitter circuit 130 also subjects the to-be-transmitted signal to frequency conversion, channel selection, orthogonal modulation and signal amplification, etc. The orthogonal modulation is executed on the basis of the local area oscillated signal generated from the synthesizer circuit 140. The synthesizer circuit 140 generates the local area oscillated signal of a frequency necessary for signal transmission under the control of a control signal from the control section 300, and supplies the local area oscillated signal to the transmitter circuit 130.

The local area oscillated signal supplied by the synthesizer circuit 140 is input to the 90-degree phase shifter, where signals of phases shifted by 90° from each other are created. These signals are input to the down converter, where they are mixed with a transmitter radio frequency signal output from the low-noise amplifier, thereby creating, by frequency conversion, two transmitter baseband signals of phases shifted by 90° from each other. Out of band undesired signal components and noise contained in the signals are removed by the low-pass filter. The transmitter baseband signals with no out of band undesired signal components and noise are supplied to a transmitter power amplifier (not shown), where the transmitter baseband signals are amplified to a predetermined level at an amplification rate designated by a control signal output from the control section 300. The resultant transmitter signals are transmitted from the antenna 110 via the duplexer 120.

The user of the radio communication terminal uses a key input section 340 to operate the terminal. For example, when the terminal has received an incoming call, the user pushes a predetermined button. Further, when the user executes transmission, they use the section 340 to input a phone number. In addition to the key input section 340, a multi-function key, for example, is provided for realizing predetermined functions.

A power supply section 500 supplies power to the radio communication terminal. The section 500 comprises a battery 530 such as a lithium ion battery, a charging section 520 for charging the battery 530, a charging adaptor 510 for supplying power to the charging section 520, and a power supply ASIC (Application Specific Integrated Circuit) 540.

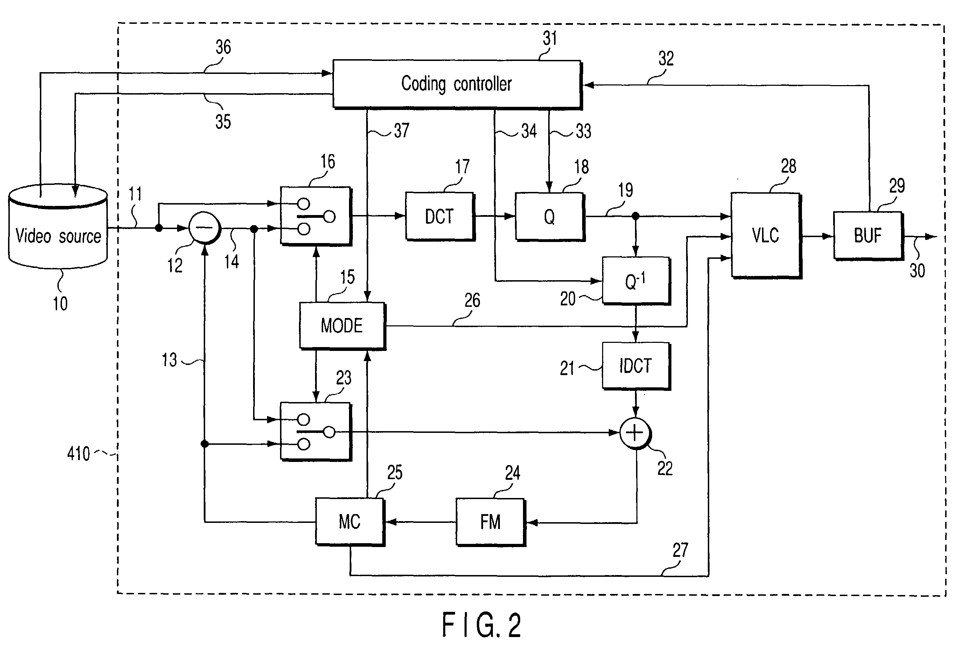

FIG. 2 is a block diagram of the MPEG-4 module 410 appearing in FIG. 1 and serving as a video coding apparatus according to the first embodiment of the invention. The video coding apparatus is installed in, for example, a mobile radio terminal, and is used to transmit a moving picture when utilizing the terminal as, for example, a videophone.

In FIG. 2, a video source 10 is an image input device serving as a moving-picture signal source such as a compact digital video camera or a record reproduction device. The video source 10 outputs a digital image signal 11 in units of frames. The video source 10 provides a pause function. When the user has operated the pause function while a moving-picture signal is outputting for photography or reproduction, a still image signal is output.

The image signal 11 (hereinafter referred to as an "input image signal") output from the video source 10 is coded in the following manner by the MPEG-4 video coding method. The input image signal 11 is input to a subtractor 12, where a difference between the input image signal 11 and a predicted image signal 13 is calculated to thereby generate a prediction error signal 14. A switch 16 selects one of the prediction error signal 14 and the input image signal 11. The switch 16 is controlled by a mode selecting section 15. The signal selected by the switch 16 is subjected to a discrete cosine transform executed by a discrete cosine transformer (DCT) 17.

A quantizer (Q) 18 quantizes DCT coefficient information, which is created on the basis of a signal resulting from the discrete cosine transform executed by the discrete cosine transformer 17. The DCT coefficient information 19 resulting from the quantization operation of the quantizer 18 is output to two sections. That is, the DCT coefficient information 19 is input to a variable length coder (VLC) 28, while the information 19 is also input to a dequantizer (Q⁻¹) 20. The DCT coefficient information item 19 input to the dequantizer 20 is subjected to a process in reverse to that executed by the quantizer 18, i.e. a dequantization process. The dequantized DCT coefficient information is input to an inverse discrete cosine transformer (IDCT) 21, where the input dequantized DCT coefficient information is subjected to a process in reverse to that executed by the discrete cosine transformer 17, i.e. inverse discrete cosine transformer. The inverse-cosine-transformed DCT coefficient information is added to a signal input from a switch 23 by an adder 22, thereby creating a local area decoded signal. The local area decoded signal is stored in a frame memory (FM) 24 and input to a motion-compensation predictor (MC) 25. The motion-compensation predictor 25 creates a predicted image signal 13 on the basis of the local area decoded signal, and outputs predicted information to the mode selecting section 15.

The mode selecting section 15 selects whether intra coding (intra-frame coding) or inter coding (inter-frame coding) is executed in units of macroblocks, on the basis of the predicted information from the motion-compensation predictor 25. The mode selecting section 15 selects one of intra coding mode, inter coding mode and not-coding mode. One of the modes is assigned to each macroblock. An intra macroblock is an image area in which intra coding is executed. An inter macroblock is an image area in which inter coding is executed. Further, a not-coded macroblock is an image area in which no coding is executed. The mode selecting section 15 controls the switches 16 and 23.

Specifically, if the MPEG-4 module 410 executes the intra coding, the switch 16 selects the input image signal 11, and the switch 23 selects a signal output from the adder 12. In this case, the input image signal 11 is extracted as the DCT coefficient information 19 via the discrete cosine transformer 17 and the quantizer 18. This DCT coefficient information 19 is supplied to one input of the adder 22 via the dequantizer 20 and the inverse discrete cosine transformer 21. A signal supplied from the switch 23 to the other input of the adder 22 is a signal 14 output from the subtractor 12. Since no signal is output from the subtractor 14 when executing intra coding, an image signal substantially the same as the input image signal 11 is output as a local area decoded signal to the frame memory 24.

In other words, during intra coding, each frame is divided into macroblocks that are basic process units. Subsequently, each macroblock is subjected to a discrete cosine transform. Each transformed macroblock is quantized. Each quantized DCT coefficient and quantization step are subjected to variable length coding.

On the other hand, if the MPEG-4 module 410 executes the inter coding, the switch 16 selects the predicted error signal 14, and the switch 23 selects the predicted image signal 13. In this case, the predicted error signal 14 output from the subtractor 12 is extracted as the DCT coefficient information 19 via the discrete cosine transformer 17 and the quantizer 18. This DCT coefficient information 19 is supplied to one input of the adder 22 via the dequantizer 20 and the inverse discrete cosine transformer 21. Since the predicted image signal 13 is supplied to the other input of the adder 22, an image signal substantially the same as the input image signal 11 is output as a local area decoded signal to the frame memory 24.

In other words, during inter coding, a predicted macroblock having a minimum error with respect to a to-be-coded macroblock (a target macroblock), is detected from a VOP (Video Object Plane) adjacent in time to another VOP that includes the target macroblock. This detection is executed by detecting a motion such as block matching. A motion vector indicates a motion from the target macroblock to a predicted macroblock having a minimum error. On the basis of the detected motion vector, motion compensation is executed on a reference VOP to thereby obtain an optimal predicted macroblock. The reference VOP is an image to be referred to for creating a predicted macroblock. Subsequently, a difference between a target macroblock and a corresponding predicted macroblock is calculated and subjected to DCT, thereby quantizing a DCT coefficient. The quantized DCT coefficient is subjected to variable length coding, together with a corresponding motion vector and quantization step.

The resultant local area decoded signal output from the adder 22 is stored in the frame memory 24 as a reference image signal used to execute coding on the next frame. The motion-compensation predictor 25 executes motion compensation on the reference image signal read from the frame memory 24, thereby creating a predicted image signal 13.

The quantized DCT coefficient information 19 output from the quantizer 18, mode information 26 output from the mode selecting section 15 and motion vector information 27 created by the motion-compensation predictor 25 for motion compensation are input to a variable length coder 28. The variable length coder 28 executes variable length coding on these information items 19, 26 and 27. Variable length coded bits output from the variable length coder 28 are once stored in a buffer (BUF) 29 and output as a coded bitstream 30 to the control section 300.

The buffer 29 provides a function of outputting buffer occupancy information 32 indicative of the number of coded bits. The buffer occupancy information 32 is input to a coding controller 31. The coding controller 31 calculates the number of coded bits of the coder 28 on the basis of the buffer occupancy information 32. The coding controller 31 also controls, on the basis of the number of coded bits, a quantization parameter or a frame rate used in the coder 28 so as to ensure a constant bitrate of the coded bitstream 30. Specifically, the coding controller 31 supplies quantization information items 33 and 34 to the quantizer 18 and the dequantizer 20, respectively, and also supplies a frame rate control signal 35 to the video source 10.

The video source 10 provides the aforementioned pause function, and outputs an image signal indicative of a still image frame when the user has operated the pause function. While the pause function is being executed, the video source 10 supplies the coding controller 31 with pause operation information 36 indicating that the pause function is being executed. Upon receiving the pause operation information 36, the coding controller 31 determines that the present frame of the input image signal 11 indicates a still image, thereby outputting intra-coding-mode-setting information 37 to the mode selecting section 15.

Upon receiving the intra-coding-mode-setting information 37, the mode selecting section 15 forcibly sets the intra coding mode for all the frames of the input image signal 11, irrespective of information output from the motion-compensation predictor 25. As a result, the still image frame of the input image signal 11 is determined to be an intra frame (which is called I-VOP in MPEG-4), and is coded in the intra coding mode.

Furthermore, upon receiving the pause operation information 36, the coding controller 31 executes, using the frame rate control signal 35, frame skipping on an image signal output from the video source 10 in order to reduce the frame rate. As a result, the decoded image quality of a still image is enhanced.

When the pause operation has been released in the video source 10, the pause operation information 36 is turned off, whereby the coding controller 31 stops the output of the intra-coding-mode-setting information 37 and returns the frame rate control signal 35 to an original signal so that the frame rate returns to a usual rate. When the output of the intra-coding-mode-setting information 37 is stopped, the coding mode is returned to a mode selected by the mode selecting section 15, in many cases, to the inter coding mode.

As described above, when the pause operation has been executed in the video source 10, the present frame of the image input signal 11 is determined to indicate a still image, thereby forcibly setting the coding mode for the still image frame to the intra coding mode. As a result, a visually discernible degradation of image quality can be avoided. This effect will be described in detail.

In the case of using the MPEG-4 video coding method for moving-picture signal transmission that is executed in a mobile radio terminal when utilizing the terminal as a videophone, the initial frame of an input image signal is set to an intra frame (I-VOP), and most of the later frames are set to inter frames (P-VOP). Since still image frames are also set to inter frames, most macroblocks are used as inter macroblocks, and most intra macroblocks are refreshed macroblocks periodically input when seeing the still images in units of macroblocks. Accordingly, in the case of still images, periodically input intra macroblocks are conspicuous among the inter macroblocks, thereby causing a visually discernible degradation of image quality.

On the other hand, in the present invention, since still image frames are forcibly set to intra frames, thereby using all macroblocks in each still image frame as intra macroblocks, there is no case where intra macroblocks formed of refreshed macroblocks locally exist among a large number of inter macroblocks. This being so, even a still image or an image that does not contain much motion does not appear degraded in image quality.

Further, in the prior art, in a still image frame, a quantization step is set large in order to suppress the coding bitrate. If an image in a refreshed macroblock is complicated and hence the number of coded bits is high, the quantization step of the next frame is set large in order to suppress the coding bitrate. Therefore, the image quality of later frames is degraded, and image quality variations between frames become conspicuous.

In the embodiment of the present invention, intra coding frames, which provide images of high quality, are assigned to the still image frames of the input image signal 11. Moreover, while still image frames are in a series, no coding is necessary and all macroblocks are not-coded macroblocks except for the initial frame. Accordingly, when the switchover to a still image frame has occurred, the number of coded bits is increased at the beginning since the entire frame is intra-coded. However, subsequent frames contain only not-coded macroblocks, and hence the number of coded bits is significantly reduced, with the result that the coding bitrate is suppressed. This means that it is not necessary to much increase the quantization step so as to suppress the coding bitrate. Thus, a degradation of image quality can be reduced, which solves the problem of variations in image quality between frames.

### (Second Embodiment)

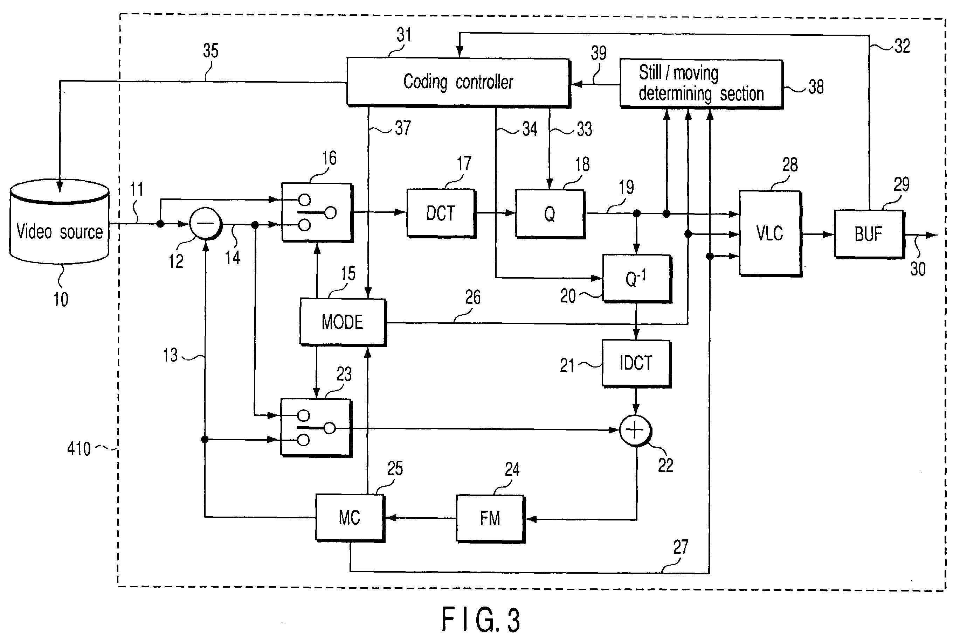

FIG. 3 shows the configuration of a video coding apparatus according to a second embodiment. In this embodiment, it is automatically determined, using, for example, a statistical method, whether the present frame of the input image signal 11 is a moving-picture frame or a still image frame. In FIG. 3, reference numerals corresponding to those in FIG. 2 denote similar elements, and different elements will be mainly described. The second embodiment differs from the first embodiment in that in the former, a still/moving detecting section 38 is provided instead of supplying the pause operation information 36 from the video source 10 to the coding controller 31.

The still/moving detecting section 38 uses information created during a coding process to determine whether the present frame of the input image signal 11 is a moving-picture frame or a still image frame. In this embodiment, the quantized DCT coefficient information 19 output from the quantizer 18, the mode information 26 output from the mode selecting section 15, and the motion vector information 27 output from the motion-compensation predictor 25 are input to the still/moving determining section 38. The still/moving determining section 38 is configured to execute a determination on the basis of the input information items 19, 26 and 27.

In frames (inter frames) on which inter coding is executed, there is a case where a difference in image data is small between a previous frame and a present frame to be coded, since they contain similar images of picture patterns. In this case, in general, a method is employed, in which no coding is executed on all macroblocks of the present frame and setting them to not-coded macroblocks, and decoded images corresponding to all macroblocks of the previous frame are used for the not-coded macroblocks on the decoding side. Therefore, if still image frames continue in the input image signal 11, most macroblocks are set to not-coded macroblocks in second following frames. Further, in this case, coding is scarcely executed and hence the number of coded bits is reduced. In light of this, stuffing is executed to maintain a constant coding bitrate.

Utilizing this, the still/moving determining section 38 determines a still image frame or a frame that does not contain much motion, which is included in the input image signal 11. Specifically, the still/moving determining section 38 determines, on the basis of the mode information 26, whether or not the coding mode for the present frame of the input image signal 11 is the inter coding mode. If it is determined that the coding mode is the inter coding mode, the still/moving determining section 38 determines, on the basis of zero coefficients contained in the quantized DCT coefficient information 19, whether or not a state in which most macroblocks in one frame are not-coded macroblocks continues over a plurality of frames. For example, it is determined whether or not two or more frames in which the ratio of not-coded macroblocks to all macroblocks of one frame is 80% or more are in a series. It is a matter of course that the ratio is not limited to 80%. If different degrees of image quality are expected between images to be processed, the ratio is increased or reduced. If a higher image quality than the above-described case must be obtained, the ration is set at, for example, 95%.

Still/moving determination information 39 obtained by the still/moving determining section 38 is input to the coding controller 31. If the still/moving determination information 39 indicates a still image frame, the coding controller 31 outputs the intra-coding-mode-setting information 37 to the mode selecting section 15 and executes control so as to reduce the frame rate of the input image signal 11, using the frame rate control signal 35, as in the first embodiment. Upon receiving the intra-coding-mode-setting information 37, the mode selecting section 15 forcibly sets the intra coding mode for all the frames of the input image signal 11, irrespective of information 27 from the motion-compensation predictor 25, thereby coding still image frames in the intra coding mode.

In the above-described second embodiment, it is automatically determined whether the present frame of an input image signal is a still image frame or a moving-picture frame, thereby forcibly coding the still image frames of the input image signal in the intra coding mode. As a result, the visually discernible image quality can be enhanced as in the first embodiment.

As described above, in the embodiments of the present invention, if the present frame of an input image signal is a still image frame, the coding mode is forcibly set to the intra coding mode. This prevents a refreshed macroblock from being conspicuous in a still image frame, and prevents image quality variations due to variations in the quantizing parameter caused by the refreshed macroblock. Consequently, a visually discernible degradation of image quality due to a refreshed macroblock can be suppressed effectively.

Although, in the above embodiments, a video coding apparatus (e.g. the MPEG-4 module shown in FIG. 1) is connected to a mobile radio terminal, the invention is not limited to the mobile radio terminal. The invention may be directed to an instrument that employs a camera or an image input terminal for inputting image data, which is connected to the video coding apparatus. For example, the instrument could be a mobile information terminal with a camera or a personal computer with a camera, etc.

The invention is not limited to the above-described embodiments, but may be modified in various ways. The first and second embodiment may be combined.

## Claims

1. An image coding method for coding an image signal selectively in one of intra coding mode and inter coding mode, **characterized by** comprising:
detecting (31, 36, 38) whether an input image signal is a still image frame or a moving image frame;
coding (17, 18, 28, 29) the input image signal in the intra coding mode if the detecting detects the input image signal is a still image frame.

2. The image coding method according to claim 1, **characterized in that** the detecting (31, 36, 38) detects a setting signal (36, 19, 26, 27) indicating the change from a moving image frame to a still image frame.

3. The image coding method according to claim 1, **characterized in that** the detecting detects (38) the input image signal is a still image frame, if the input image signal includes the sequence (19) of not-coded macroblocks and a magnitude (27) of motion vector between frames is under the predetermined value.

4. The image coding method according to claim 1, **characterized in that** the coding (17, 18, 28, 29) codes the input image signal (15) of the first still picture in the intra coding mode.

5. An image coding apparatus **characterized by** comprising:
a detection section (31, 38) configured to detect whether an input image signal is a still image frame or a moving image frame; and
a coding section (17, 18, 28, 29) configured to code the input image signal in the intra coding mode if the detecting detects the input image signal is a still image frame.

6. The image coding apparatus according to claim 5, **characterized in that** the detection section (31, 38) detects a setting signal indicating the change from a moving image frame to a still image frame.

7. The image coding apparatus according to claim 5, **characterized in that** the detection section (31, 38) detects the input image signal is a still image frame, if the input image signal includes the sequence of not-coded macroblocks and a magnitude of motion vector between frames is under the predetermined value.

8. The image coding apparatus according to claim 5, **characterized in that** the coding section (17, 18, 28, 29) codes the input image signal of the first still picture in the intra coding mode.

9. A mobile radio terminal **characterized by** comprising:
an image input section (10) configured to input an image signal;
a detection section (31, 38) configured to detect whether an input image signal is a still image frame or a moving image frame; and
a coding section (17, 18, 25, 28, 29) configured to code the input image signal in the intra coding mode if the detecting detects the input image signal is a still image frame.

10. The mobile radio terminal according to claim 9, **characterized in that** the detection section (31, 38) detects a setting signal indicating the change from a moving image frame to a still image frame.

11. The mobile radio terminal according to claim 9, **characterized in that** the detection section (31, 38) detects the input image signal is a still image frame, if the input image signal includes the sequence of not-coded macroblocks and a magnitude of motion vector between frames is under the predetermined value.

12. The mobile radio terminal according to claim 9, **characterized in that** the coding section (17, 18, 28, 29) codes the input image signal of the first still picture in the intra coding mode.
